(19) Europäisches Patentamt
European Patent Office
Office européen des brevets

(11)  **EP 2 552 153 B1**

(12)  **EUROPEAN PATENT SPECIFICATION**

(45) Date of publication and mention
of the grant of the patent:
**19.07.2017  Bulletin 2017/29**

(51) Int Cl.:
*H04L 1/00* (2006.01)     *H04L 1/18* (2006.01)
*H04W 52/26* (2009.01)    *H04W 52/36* (2009.01)

(21) Application number: **10851672.5**

(86) International application number:
**PCT/CN2010/080323**

(22) Date of filing: **27.12.2010**

(87) International publication number:
**WO 2011/143915 (24.11.2011 Gazette 2011/47)**

(54) **METHOD AND SYSTEM FOR CHOOSING ENHANCED DEDICATED TRANSPORT CHANNEL TRANSPORT FORMAT COMBINATION (E-TFC)**

VERFAHREN UND SYSTEM ZUR AUSWAHL EINER TRANSPORTFORMATKOMBINATION FÜR ERWEITERTEN DEDIZIERTEN TRANSPORTKANAL (E-TFC)

PROCÉDÉ ET SYSTÈME PERMETTANT DE SÉLECTIONNER UNE COMBINAISON DE FORMAT DE TRANSPORT DE CANAL DE TRANSPORT DÉDIÉ AMÉLIORÉE (E-TFC)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **18.05.2010   CN 201010178087**

(43) Date of publication of application:
**30.01.2013   Bulletin 2013/05**

(73) Proprietor: **ZTE Corporation**
**Shenzhen, Guangdong 518057 (CN)**

(72) Inventor: **SU, Lan**
**Shenzhen**
**Guangdong 518057 (CN)**

(74) Representative: **Modiano, Micaela Nadia**
**Modiano Josif Pisanty & Staub Ltd**
**Thierschstrasse 11**
**80538 München (DE)**

(56) References cited:
WO-A1-02/052757       WO-A1-2007/043455
CN-A- 1 819 578       CN-A- 101 466 123
CN-A- 101 646 206     CN-A- 101 820 649
US-A- 5 729 557

• **"HSUPA Concepts", , 15 January 2009 (2009-01-15), XP055150764, Retrieved from the Internet: URL:http://wireless.agilent.com/rfcomms/re fdocs/wcdma/wcdma_gen_bse_hsupa_concept s.h tml [retrieved on 2014-11-04]**
• **"3rd Generation Partnership Project; Technical Specification Group Radio Access Network; Radio Resource Control (RRC); Protocol Specification (Release 8)", 3GPP STANDARD; 3GPP TS 25.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.8.0, 1 September 2009 (2009-09-01), pages 1-1697, XP050368028,**

**Description**

Technical Field

The present invention relates to the field of communication technologies, and more especially, to a method and system for choosing an enhanced dedicated channel transport format combination.

Background of the Related Art

The Universal Mobile Telecommunications System (UMTS) is one of the 3rd Generation (3G) systems, and its network structure is composed of the core network (CN), the Universal Terrestrial Radio Access Network (UTRAN) and the User Equipment (UE). The air interface (Uu interface) is used between the UTRAN and the UE to communicate.
The High Speed Uplink Packet Access (HSUPA) function is introduced in the 3rd Generation Project Partnership (GPP) Release 6 (R6), mainly to support the high-speed uplink data service, reduce the transport delay and increase the peak rate. After the HSUPA function is introduced in the media access control (MAC) layer, two entities: the MAC-es and the MAC-e are added to compose the Radio Link Control (RLC) protocol data unit (PDU) into a MAC-e PDU, and the physical layer is notified to send it to NodeB.
In order to compose the RLC PDU into an appropriate MAC-e-PDU, it needs to choose the Enhanced Dedicated Channel (E-DCH) transport format combination (E-TFC), that is, in the E-DCH transport format combination Set (E-TFCS), the appropriate transport block size (TB Size) and the modulation mode are chosen, and the physical layer is notified of the chosen E-DCH Transport Format Combination Indicator (E-TFCI) and the modulation mode, and the physical layer sends the data to the NodeB in accordance with the chosen E-TFCI and modulation mode.
The Radio Resource Control (RRC) layer assigns a priority from 1-8 to each logical channel, and 1 is the highest priority and 8 is the lowest priority. The UE needs to choose the E-TFC based on these priorities. The logical channel has the absolute priority, that is, the UE will try to transport data with higher priority.
For each configured MAC-d flow, the E-TFC can be in a support state or in a block state: if it is a re-transmission, only the E-TFC with the same transport block size in the initial transport is in the support state;
in accordance with the granted time slot and code word, only when the code rate corresponding to the E-TFC is between the minimum and maximum code rates (including the minimum code rate), the transport is permitted; only the E-TFC whose calculated and sent enhanced physical uplink channel power $P_{E-PUCH}$ is less than or equal to the available and granted power can be used for transport. For the re-transmission in the non-scheduling mode, it does not need to consider the power constraint, thus this rule is not applicable. The chosen E-TFC is always the minimum E-TFC in the support state. The modulation mode corresponding to the E-TFC which is selected by UE should make $P_{E-PUCH}$ minimum, that is, if one E-TFC supports both Quadrature Phase Shift Keying (QPSK) and 16 Quadrature Amplitude Modula (16QAM), and if $P_{E-PUCH}$ in the 16QAM is less than the power in the QPSK, the 16QAM is selected, otherwise the QPSK is selected.
The traditional method for choosing the E-TFC includes: first selecting one available E-TFC set in the E-TFCS table based on the reference minimum and maximum code rates, and further selecting an available E-TFC set according to the maximum transmit power allowed by the Enhanced Physical Uplink Channel (E-PUCH), and finally selecting the E-TFC and modulation mode where the maximum data is transported and the transmit power is minimum from the E-TFC set. With this method, each selection needs one traversal process and every traversal requires calculating the transmit power repeatedly. The division operation is required for calculating the transmit power, which has a certain requirement on the precision, therefore, there is large calculation amount, the computation is complicated and time-consuming, and at each time, maintaining the precision should be taken into account.

Summary of the Invention

The technical problem to be solved in the present invention is to provide a method and system for choosing an enhanced dedicated channel transport format combination (E-TFC) to simplify and speed up the E-TFC selection process, reduce the complexity and improve the system performance.
In order to solve the aforementioned technical problem, the present invention provides a method and a system, as provided by the appended independent claims. Patent application document US 5,729,557, on figures 2A and 2B and column 6 line 1 to column 7 line 11 discloses an adaptation of the code rate according to the available transmission power and a channel conditions.

Brief Description of Drawings

FIG. 1 is a schematic diagram of steps in the method for choosing E-TFC provided in the present invention;
FIG. 2 is a flow chart of process of the method for choosing E-TFC in accordance with an embodiment of the present invention.

Preferred Embodiments of the Present Invention

The idea of the present invention solving the problem in the related art is as follows: the fundamental purpose of the E-TFC selection is to choose the appropriate transport block size and the modulation mode for the subsequent E-DCH data transport, regardless of choosing the transport block size or modulation mode, it is ultimately limited by the transmit power. In the present invention, by searching the reverse mapping relation of the code rate and the power, the maximum available transmit power is first searched out, and based on the reverse mapping relation of the code rate and the power, the code rate when using the maximum available transmit power is calculated, thus determining the final code rate and the final transmit power, and ultimately determining the E-TFC.

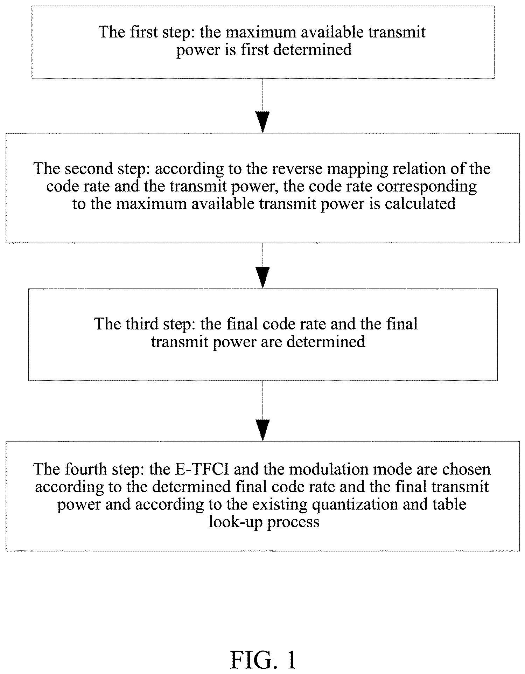

Based on the above idea, the present invention provides a method for choosing an E-TFC, and as shown in FIG. 1, the method specifically uses the following technical solution:

the first step, the maximum available transmit power is first determined, wherein, the power is a smaller one of granted power equivalent to a hybrid auto repeat request (HARQ) process which can be used by a scheduling or non-scheduling transport group and maximum transmit power allowed by enhanced physical uplink channel (E-PUCH);

wherein, the granted power equivalent to the HARQ process is the sum of the granted power of the HARQ process and the HARQ power offset attribute of the scheduling or non-scheduling group; the maximum transmit power allowed by E-PUCH refers to the maximum transmit power allowed by the user equipment (UE) in the E-PUCH.

The second step: according to the reverse mapping relation of the code rate and the transmit power, the code rate corresponding to the maximum available transmit power is calculated;
the third step: the final code rate and the final transmit power are determined in accordance with the calculated code rate;
the fourth step: an appropriate E-TFCI and the modulation mode are finally chosen according to the determined final code rate and the transmit power and the existing quantization and table look-up process.

Furthermore, in the aforementioned second step, the specific implemetation of the reverse mapping relation of the code rate and the transmit power is: for any given code rate A, two reference code rates A0 and A1 can be searched out in the configured reference code rates so that A is greater than A0 and less than A1, and according to the powers P0 and P1 corresponding to the A0 and A1 in the configuration, the power P corresponding to the code rate A can be calculated, and the formula is $P = P0 + (P1- P0)/(A1-A0)*(A-A0)$. With the formula, if there is a pre-specified value of power P, the code rate A can be solved, that is, $A = A0 + (P-P0) / (P1-P0) * (A1-A0)$;
wherein, P0 is the maximum value in all the reference powers less than P, and P1 is the minimum value in all the reference powers greater than P. A0 is the reference code rate corresponding to P0, and A1 is the reference code rate corresponding to P1.

Furthermore, in the aforementioned step 3, determining the final code rate and the final transmit power according to the calculated code rate is specifically:

if the calculated corresponding code rate is between the maximum reference code rate and the minimum reference code rate (that is, the maximum and minimum code rates configured by the RRC), determining the code rate as the final code rate, and setting the power as the maximum available transmit power P;

otherwise, if the calculated code rate is greater than the maximum reference code rate, setting the final code rate as the maximum reference code rate, however, if the calculated code rate is less than the minimum reference code rate, setting the final code rate as the minimum reference rate, and according to the reverse mapping relation of the code rate and the power $P=P0+(P1-P0)/(A1-A0)*(A-A0)$, recalculating the transmit power to obtain the final transmit power.

It can be seen that in the aforementioned solution, two calculations are required to be executed at most according to the forward and reverse mappings of the code rate and the power, and the E-TFC can be ultimately determined.

Since the E-TFC selection requires that the finally selected transport format makes the code rate between the maximum code rate and minimum code rate, and the transmit power cannot exceed the maximum available transmit power, it can be concluded that the granted power make the code rate not less than the minimum code rate. Moreover, if the granted power makes the code rate greater than the maximum code rate, the final transmit power must be adjusted to the power required to make the code rate not exceed the maximum code rate. Therefore, the aforementioned method meets the requirement of the E-TFC selection.

In the following, the implementation of technical solution of the present invention will be described in further detail in combination with the accompanying drawings and specific embodiments. It should be noted that in the case of no conflict, the embodiments in this application and the characteristics of the embodiments could be randomly combined with each other.

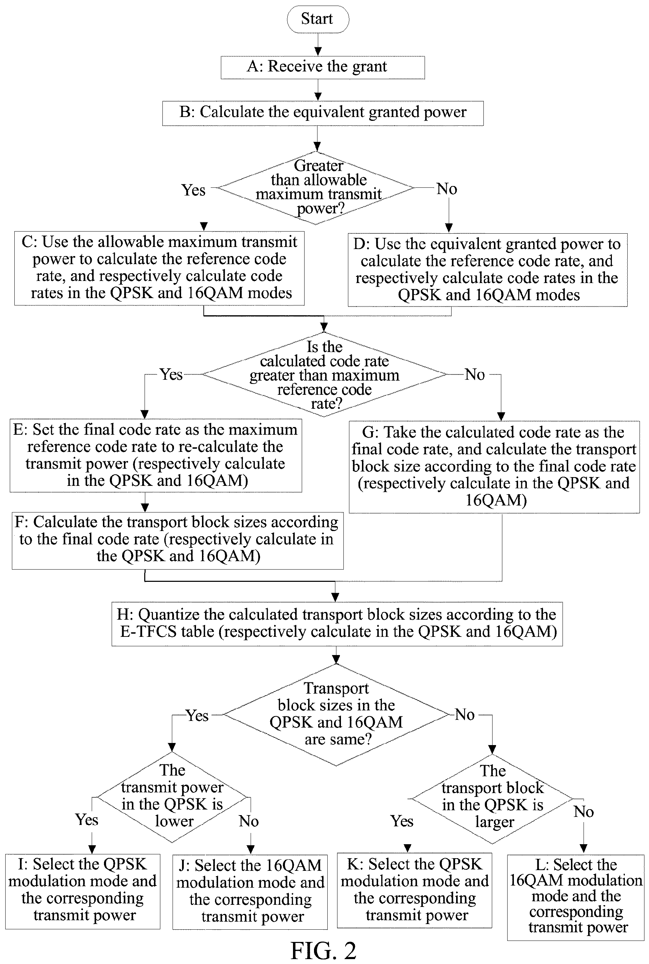

As shown in FIG. 2, the method for choosing the E-TFC in accordance with the embodiment of the present invention mainly comprises the following steps:

Step A: the NodeB sends a grant to the UE, and the grant can be a scheduling grant or a non-scheduling grant, wherein, the grant information comprises the value of granted power, the spreading factor, the time slot configuration and other information, and the UE MAC layer receives and saves the grant information, proceed to step B;

Step B: combined with the spreading factor and the HARQ process power offset attribute, the value of granted power equivalent to a certain HARQ process is calculated, and the value of granted power is the sum of the granted power of the HARQ process and the HARQ power offset attribute of the scheduling or non-scheduling transport group, and if the value is greater than the maximum transmit power allowed by the E-PUCH, proceed to step C, and if the value is no greater than the maximum transmit power allowed by the E-PUCH, proceed to step D;

since in practical applications, the calculated code rate corresponding to the maximum available transmit power is no less than the minimum reference code rate, in actual operations, in the aforementioned step B, it only needs to judge whether the calculated code rate is greater than the maximum reference code rate or not.

Step C: the maximum transmit power allowed by the E-PUCH is taken as the maximum available transmit power P, and the code rates in the QPSK and 16QAM modulation modes are respectively calculated, and two powers P0 and P1 in the configured reference powers and their corresponding code rates A0 and A1 are searched out, so as to make P greater than P0 and less than P1, and the code rate A corresponding to P is calculated, the method is A=A0+(P-P0)/(P1-P0)*(A1-A0), and if the calculated code rate is greater than the maximum reference code rate, proceed to step E, otherwise proceed to step G;

Step D: the granted power value equivalent to a certain HARQ process is taken as the maximum available transmit power P, and the code rates in the QPSK and 16QAM modulation modes are respectively calculated, and the calculation method is the same as that of step C, if the calculated code rate is greater than the maximum reference code rate, proceed to step E, if the calculated code rate is not greater than the maximum reference code rate, proceed to step G;

Step E: the final code rate is set as the maximum reference code rate, and the transmit power is re-calculated, that is, according to the final code rate A, two code rates A0 and A1 in the configured reference code rates and their corresponding powers P0 and P1 are searched out, so that A is greater than A0 and less than A1, the method is P=P0+(P1-P0)/(A1-A0)*(A-A0), and proceed to step F;

Step F: in the QPSK and 16QAM modulations, the transport block sizes are respectively calculated according to the final code rate, and proceed to step H;

Step G: the calculated code rate is taken as the final code rate, and in the QPSK and 16QAM modulations, the transport block sizes are respectively calculated according to the final code rate, and proceed to step H;

Step H: in the QPSK and 16QAM modulation modes, the calculated transport block sizes are respectively quantized according to the E-TFCS table to become the values in the table, and it is judged whether the quantized transport block sizes in two modulation modes are the same or not:

if the quantized transport block sizes in two modulation modes are the same, the modulation mode with the minimum transmit power and the corresponding transmit power are chosen, that is: if the transmit power required by the QPSK modulation is smaller, proceed to step I, if the transmit power required by the 16QAM modulation is smaller, proceed to step J;

if the quantized transport block sizes in two modulation modes are not the same, the modulation mode with the maximum quantized transport block and the corresponding transmit power are chosen, that is: if the quantized transport block in the QPSK modulation mode is larger, proceed to step K; if the quantized transport block in the 16QAM modulation mode is relatively larger, proceed to step L;

Step I: the QPSK modulation mode and the corresponding transmit power are selected;

Step J: the 16QAM modulation mode and the corresponding transmit power are selected;

Step K: the QPSK modulation mode and the corresponding transmit power are selected;

Step L: the 16QAM modulation mode and the corresponding transmit power are selected.

Correspondingly, the present invention also provides a system for choosing an enhanced dedicated channel transport format combination (not shown in the drawings), and said system comprises:

a code rate calculating unit, which is configured to: determine maximum available transmit power, and according to a reverse mapping relation of code rate and transmit power, calculate the code rate corresponding to the maximum available transmit power; wherein, the maximum available transmit power is a smaller one of granted power equivalent to a hybrid auto repeat request (HARQ) process of a scheduling or non-scheduling transport group and maximum transmit power allowed by enhanced physical uplink channel (E-PUCH);

a final transmit power determining unit, which is configured to: determine the final code rate and the final transmit power in accordance with the calculated code rate; and

an E-TFC choosing unit, which is configured to: choose an E-TFC according to the determined final transmit power.

Said final transmit power determining unit is configured to determine the final code rate and the final transmit power as follows:

judging whether the calculated code rate is between the maximum reference code rate and the minimum reference code rate or not, if yes, determining the code rate as the final code rate, and determining the maximum available transmit power as the final transmit power;

if the calculated code rate is greater than the maximum reference code rate, determining the maximum reference code rate as the final code rate, if the calculated code rate is less than the minimum reference code rate, determining the minimum reference code rate as the final code rate; re-determining the final transmit power according to the determined final code rate.

Said code rate calculating unit is configured to calculate the code rate corresponding to the maximum available transmit power according to the following reverse mapping relation of the code rate and the transmit power:

$$A = A0 + (P-P0)/(P1-P0)*(A1-A0);$$

wherein, P is the power, A is the code rate corresponding to P, P0 is the maximum value in all the reference powers less than P, P1 is the minimum value in all the reference powers greater than P, A0 is the reference code rate corresponding to P0, and A1 is the reference code rate corresponding to P1.

Said E-TFC choosing unit is configured to choose the E-TFC according to the determined final transmit power as follows:

respectively calculating the transport block sizes in different modulation modes according to the final transmit power, and respectively quantizing the calculated transport block sizes according to the E-TFCS table;

if the quantized transport block sizes in different modulation modes are the same, choosing the modulation mode with the minimum transmit power and the corresponding transmit power; if the quantized transport block sizes in different modulation modes are not the same, choosing the modulation mode with the maximum quantized transport block and the corresponding transmit power.

The ordinary person skilled in the art can understand that all or part of the steps in the aforementioned method can be completed by program instructing the related hardware, and the program can be stored in a computer readable storage medium, such as a read-only memory, disk, or CD-ROM. Optionally, all or part of the steps in the aforementioned embodiments can also be achieved with one or more integrated circuits. Accordingly, each module unit in the aforementioned embodiments can be implemented in the form of hardware or software functional modules. The present invention is not limited to any particular form of hardware and software combination.

It should be understood that for the ordinary person skilled in the art, equivalent changes or replacements can be made according to the technical solution of the present invention and its idea, and all the corresponding changes or replacements should belong to the protection scope of the claims appended in the present invention.

Industrial Applicability

The present invention simplifies and speeds up the E-TFC selection process, reduces the complexity of implementation and improves the system performance by searching a reverse mapping relation of the code rate and the power.

**Claims**

1. A method for choosing an enhanced dedicated channel transport format combination, for a High Speed Uplink Packet Packet Access, HSUPA, system, comprising:

   a media access control, MAC, layer determining a maximum available transmit power, wherein, the maximum available transmit power is a smaller one of a granted power and a maximum transmit power allowed by an enhanced physical uplink channel, E-PUCH, wherein the granted power is a sum of a granted power of a hybrid auto repeat request, HARQ, process and a HARQ power offset attribute value of a scheduling or a non-scheduling group;
   according to the following formula, the MAC layer calculating a code rate corresponding to the maximum available transmit power:

$$A = A0 + (P-P0)/(P1-P0)*(A1-A0);$$

   wherein P is a transmit power, A is a code rate corresponding to P, P0 is a maximum value in all reference powers less than P, P1 is a minimum value in all reference powers greater than P, A0 is a reference code rate corresponding to P0, and A1 is a reference code rate corresponding to P1;
   the MAC layer determining a final code rate and final transmit power according to the calculated code rate; and
   the MAC layer choosing an enhanced dedicated channel transport format combination (E-TFC) according to the determined final transmit power.

2. The method of claim 1, wherein,
   the maximum transmit power allowed by said E-PUCH refers to the maximum transmit power allowed by user equipment, UE, in the E-PUCH.

3. The method of claim 1, wherein,
   the step of determining the final code rate and the final transmit power according to the calculated code rate comprises:

   if the calculated code rate is between a maximum reference code rate and a minimum reference code rate, determining the calculated code rate as the final code rate, and determining said maximum available transmit power as the final transmit power;
   if the calculated code rate is greater than the maximum reference code rate, determining the maximum reference code rate as the final code rate, and re-determining the final transmit power according to the determined final code rate;
   if the calculated code rate is less than the minimum reference code rate, determining the minimum reference code rate as the final code rate, and re-determining the final transmit power according to the determined final code rate.

4. The method of claim 3, wherein,

the step of re-determining the final transmit power according to the final code rate comprises:

according to the final code rate A, searching out two code rates A0 and A1 in configured reference code rates as well as corresponding powers P0 and P1, making A greater than A0 and less than A1, and calculating the final transmit power P according to a following formula:

$$P=P0+(P1-P0)/(A1-A0) * (A-A0).$$

5. The method of claim 1, 2, 3 or 4, wherein,
   the step of choosing the E-TFC according to the determined final transmit power comprises:

   respectively calculating transport block sizes in different modulation modes according to said final transmit power, and respectively quantizing the calculated transport block sizes according to an enhanced dedicated channel transport format combination set (E-TFCS) table;
   if the quantized transport block sizes in the different modulation modes are same, choosing a modulation mode with minimum transmit power and corresponding transmit power; if the quantized transport block sizes in the different modulation modes are not same, choosing a modulation mode with maximum quantized transport block and corresponding transmit power.

6. The method of claim 5, wherein,
   said different modulation modes comprise: QPSK and 16QAM.

7. A system for choosing an enhanced dedicated channel transport format combination, for a High Speed Uplink Packet Packet Access, HSUPA, system, comprising:

   a code rate calculating unit, which is configured to: determine a maximum available transmit power, and according to the following formula, calculate the code rate corresponding to the maximum available transmit power:

   $$A=A0+ (P-P0)/(P1-P0)*(A1-A0);$$

   wherein P is a transmit power, A is a code rate corresponding to P, P0 is a maximum value in all reference powers less than P, P1 is a minimum value in all reference powers greater than P, A0 is a reference code rate corresponding to P0, and A1 is a reference code rate corresponding to P1;
   wherein, the maximum available transmit power is a smaller one of a granted power and a maximum transmit power allowed by an enhanced physical uplink channel, E-PUCH, wherein the granted power is a sum of a granted power of a hybrid auto repeat request, HARQ, process and a HARQ power offset attribute value of a scheduling or a non-scheduling group;
   a final transmit power determining unit, which is configured to: determine a final code rate and final transmit power in accordance with the calculated code rate; and
   an enhanced dedicated channel transport format combination, E-TFC, choosing unit, which is configured to: choose an E-TFC according to said determined final transmit power.

8. The system of claim 7, wherein,
   said final transmit power determining unit is configured to determine the final code rate and the final transmit power as follows:

   judging whether the calculated code rate is between a maximum reference code rate and a minimum reference code rate or not, if yes, determining the code rate as the final code rate, and determining the maximum available transmit power as the final transmit power;
   if the calculated code rate is greater than the maximum reference code rate, determining the maximum reference code rate as the final code rate, if the calculated code rate is less than the minimum reference code rate, determining the minimum reference code rate as the final code rate; re-determining the final transmit power according to the determined final code rate.

9. The system of claim 7 or 8, wherein,

said E-TFC choosing unit is configured to choose the E-TFC according to the determined final transmit power as follows:

respectively calculating transport block sizes in different modulation modes according to said final transmit power, and respectively quantizing the calculated transport block sizes according to an enhanced dedicated channel transport format combination set, E-TFCS, table; and
if the quantized transport block sizes in the different modulation modes are same, choosing a modulation mode with minimum transmit power as well as corresponding transmit power; if the quantized transport block sizes in the different modulation modes are not same, choosing a modulation mode with maximum quantized transport block as well as corresponding transmit power.

**Patentansprüche**

1. Ein Verfahren zur Auswahl einer Transportformatkombination für einen erweiterten dedizierten Transportkanal für ein High Speed Uplink Packet Access- (HSUPA-)System,
umfassend:

eine Media Access Control- (MAC-) Schicht, die eine maximale verfügbare Sendeleistung bestimmt, wobei die maximale verfügbare Sendeleistung die geringere einer zugelassenen Leistung und einer maximalen Sendeleistung ist, die von einem erweiterten Physikalischen Uplink Kanal, E-PUCH, zugelassen ist, wobei die zugelassene Leistung eine Summe aus einer zugelassenen Leistung eines.Hybrid Auto Repeat Anfrage-(HARQ-)Prozesses und einem HARQ-Leistungs-Offset-Attributwert einer Verwaltungs- oder einer Nicht-Verwaltungs-Gruppe ist;
wobei nach der folgenden Formel die MAC-Schicht eine Coderate berechnet, die der maximalen verfügbaren Sendeleistung entspricht:

$$A = A0 + (P-P0)/(P1-P0)*(A1-A0);$$

wobei P eine Sendeleistung ist, A eine Coderate ist, die P entspricht, P0 ein Maximalwert in allen Referenzleistungen, die kleiner als P sind, ist, P1 ein Minimalwert in allen Referenzleistungen, die größer als P sind, ist, A0 eine Referenz-Coderate ist, die P0 entspricht, und A1 eine Referenz-Coderate ist, die P1 entspricht;
wobei die MAC-Schicht eine endgültige Coderate und eine endgültige Sendeleistung entsprechend der berechneten Coderate ermittelt; und
die MAC-Schicht entsprechend der ermittelten endgültigen Sendeleistung eine Transportformatkombination für einen erweiterten dedizierten Transportkanal (E-TFC) auswählt.

2. Das Verfahren gemäß Anspruch 1, worin
die maximale Sendeleistung, die von dem E-PUCH gestattet wird, die maximale Sendeleistung bezeichnet, die vom Teilnehmergerät (UE) im E-PUCH gestattet wird.

3. Das Verfahren gemäß Anspruch 1, worin
der Schritt des Ermittelns der endgültigen Coderate und der endgültigen Sendeleistung entsprechend der berechneten Coderate Folgendes umfasst:

wenn die berechnete Coderate zwischen einer maximalen Referenz-Coderate und einer minimalen Referenz-Coderate liegt, Bestimmen der berechneten Coderate als die endgültige Coderate und Bestimmen der maximalen verfügbaren Sendeleistung als die endgültige Sendeleistung;
wenn die berechnete Coderate höher ist als die maximale Referenz-Coderate, Bestimmen der maximalen Referenz-Coderate als die endgültige Coderate und erneutes Ermitteln der endgültigen Sendeleistung entsprechend der ermittelten endgültigen Coderate;
wenn die berechnete Coderate niedriger ist als die minimale Referenz-Coderate, Bestimmen der minimalen Referenz-Coderate als die endgültige Coderate und erneutes Ermitteln der endgültigen Sendeleistung entsprechend der ermittelten endgültigen Coderate.

4. Das Verfahren gemäß Anspruch 3, worin

der Schritt des erneuten Ermittelns der endgültigen Sendeleistung entsprechend der endgültigen Coderate Folgendes umfasst:

entsprechend der endgültigen Coderate A, Aussuchen zweier Coderaten A0 und A1 in konfigurierten Referenz-Coderaten sowie entsprechender Leistungen P0 und P1, wobei A größer als A0 und kleiner als A1 gemacht wird, und Berechnen der endgültigen Sendeleistung P nach der folgenden Formel:

$$P = P0+(P1-P0)/(A1-A0)*(A-A0).$$

5. Das Verfahren gemäß Anspruch 1, 2, 3 oder 4, worin
der Schritt des Wählens des E-TFC entsprechend der ermittelten endgültigen Sendeleistung Folgendes umfasst:

entsprechendes Berechnen von Transportblockgrößen in verschiedenen Modulationsmodi entsprechend der endgültigen Sendeleistung, und entsprechendes Quantisieren der berechneten Transportblockgrößen entsprechend einer Tabelle für Transportformatkombinationssätze für erweiterten dedizierten Transportkanal (E-TFCS);
wenn die quantisierten Transportblockgrößen in den verschiedenen Modulationsmodi identisch sind, Auswählen eines Modulationsmodus mit minimaler Sendeleistung und entsprechender Sendeleistung; wenn die quantisierten Transportblockgrößen in den verschiedenen Modulationsmodi nicht identisch sind, Auswählen eines Modulationsmodus mit maximalem quantisiertem Transportblock und entsprechender Sendeleistung.

6. Das Verfahren gemäß Anspruch 5, worin
die verschiedenen Modulationsmodi Folgendes umfassen: QPSK und 16QAM.

7. Ein System zum Auswählen einer Transportformatkombination für erweiterten dedizierten Transportkanal für ein High Speed Uplink Paket Zugriffs-(HSUPA-)System, das Folgendes umfasst:

eine Coderaten-Berechnungseinheit, die konfiguriert ist, um: eine maximale verfügbare Sendeleistung zu bestimmen und nach der folgenden Formel die Coderate zu berechnen, die der maximalen verfügbaren Sendeleistung entspricht:

$$A = A0+ (P-P0)/(P1-P0)*(A1-A0);$$

wobei P eine Sendeleistung ist, A eine Coderate ist, die P entspricht, P0 ein Maximalwert in allen Referenzleistungen, die kleiner als P sind, ist, P1 ein Minimalwert in allen Referenzleistungen, die größer als P sind, ist, A0 eine Referenz-Coderate ist, die P0 entspricht, und A1 eine Referenz-Coderate ist, die P1 entspricht;
wobei die maximale verfügbare Sendeleistung die geringere einer zugelassenen Leistung und einer maximalen Sendeleistung ist, die von einem erweiterten physikalischen Uplink Kanal, E-PUCH, zugelassen ist, wobei die zugelassene Leistung eine Summe aus einer zugelassenen Leistung eines Hybrid Auto Repeat Anfrage-(HARQ-)Prozesses und einem HARQ-Leistungsausgleich-Attributwert einer Verwaltungs- oder einer Nicht-Verwaltungs-Gruppe ist;
eine Bestimmungseinheit für die endgültige Sendeleistung, die konfiguriert ist, um: eine endgültige Coderate und eine endgültige Sendeleistung gemäß der berechneten Coderate zu bestimmen; und
eine Auswahleinheit für eine Transportformatkombination für erweiterten dedizierten Transportkanal (E-TFC), die konfiguriert ist, um einen E-TFC entsprechend der ermittelten endgültigen Sendeleistung auszuwählen.

8. Das System gemäß Anspruch 7, worin
die Bestimmungseinheit für die endgültige Sendeleistung konfiguriert ist, um die endgültige Coderate und die endgültige Sendeleistung, wie folgt, zu bestimmen:

Beurteilen, ob die berechnete Coderate zwischen einer maximalen Referenz-Coderate und einer minimalen Referenz-Coderate liegt oder nicht; wenn ja, Bestimmen der Coderate als endgültige Coderate; und Bestimmen der maximalen verfügbaren Sendeleistung als endgültige Sendeleistung;
wenn die berechnete Coderate höher ist als die maximale Referenz-Coderate, Bestimmen der maximalen Referenz-Coderate als die endgültige Coderate; wenn die berechnete Coderate niedriger ist als die minimale Referenz-Coderate, Bestimmen der minimalen Referenz-Coderate als die endgültige Coderate; erneutes Bestimmen der endgültigen Sendeleistung entsprechend der festgelegten endgültigen Coderate.

**9.** Das System gemäß Anspruch 7 oder 8, worin
die E-TFC-Auswahleinheit konfiguriert ist, um den E-TFC entsprechend der ermittelten endgültigen Sendeleistung, wie folgt, auszuwählen:

entsprechendes Berechnen von Transportblockgrößen in verschiedenen Modulationsmodi entsprechend der endgültigen Sendeleistung, und entsprechendes Quantisieren der berechneten Transportblockgrößen entsprechend einer Tabelle für Transportformatkombinationssätze für erweiterten dedizierten Transportkanal (E-TFCS); und
wenn die quantisierten Transportblockgrößen in den verschiedenen Modulationsmodi identisch sind, Auswählen eines Modulationsmodus mit minimaler Sendeleistung und entsprechender Sendeleistung; wenn die quantisierten Transportblockgrößen in den verschiedenen Modulationsmodi nicht identisch sind, Auswählen eines Modulationsmodus mit maximalem quantisiertem Transportblock und entsprechender Sendeleistung.

## Revendications

**1.** Procédé pour sélectionner une combinaison de formats de transport par voies spécialisées améliorées pour un système d'accès par paquets à haut débit en liaison montante, HSUPA, comportant :

la détermination, par une couche de commande d'accès à des supports, MAC, d'une puissance maximale d'émission utilisable, la puissance maximale d'émission utilisable étant la plus petite parmi une puissance attribuée et une puissance maximale d'émission autorisée par un canal physique de liaison montante amélioré, E-PUCH, la puissance attribuée étant une somme d'une puissance attribuée d'un processus de demande de répétition automatique hybride, HARQ, et d'une valeur d'attribut de décalage de puissance dans HARQ d'un groupe en ordonnancement ou hors ordonnancement ;
le calcul par la couche MAC, conformément à la formule suivante, d'un taux de codage correspondant à la puissance maximale d'émission utilisable :

$$A = A0 + (P - P0) / (P1 - P0) * (A1 - A0),$$

où P est une puissance d'émission, A est un taux de codage correspondant à P, P0 est une valeur maximale dans toutes les puissances de référence inférieures à P, P1 est une valeur minimale dans toutes les puissances de référence supérieures à P, A0 est un taux de codage de référence correspondant à P0, et A1 est un taux de codage de référence correspondant à P1 ;
la détermination, par la couche MAC, d'un taux de codage final et d'une puissance d'émission finale en fonction du taux de codage calculé ; et
la sélection, par la couche MAC, d'une combinaison de formats de transport par voies spécialisées améliorées (E-TFC) en fonction de la puissance d'émission finale déterminée.

**2.** Procédé selon la revendication 1, dans lequel
la puissance d'émission maximale autorisée par ledit E-PUCH désigne la puissance d'émission maximale autorisée par l'équipement utilisateur, UE, dans l'E-PUCH.

**3.** Procédé selon la revendication 1, dans lequel
l'étape de détermination du taux de codage final et de la puissance d'émission finale en fonction du taux de codage calculé comprend :

si le taux de codage calculé est entre un taux de codage de référence maximal et un taux de codage de référence minimal, la détermination du taux de codage calculé comme taux de codage final, et la détermination de ladite puissance d'émission maximale utilisable comme puissance d'émission finale ;
si le taux de codage calculé est supérieur au taux de codage de référence maximal, la détermination du taux de codage de référence maximal comme taux de codage final, et la re-détermination de la puissance d'émission finale en fonction du taux de codage final déterminé ;

si le taux de codage calculé est inférieur au taux de codage de référence minimal, la détermination du taux de codage de référence minimal comme taux de codage final, et la re-détermination de la puissance d'émission finale en fonction du taux de codage final déterminé.

4. Procédé selon la revendication 3, dans lequel
l'étape de re-détermination de la puissance d'émission finale en fonction du taux de codage final comprend :

en fonction du taux de codage final A, la recherche de deux taux de codage A0 et A1 dans des taux de codage de référence configurés, ainsi que de puissances correspondantes P0 et P1, ce qui rend A supérieur à A0 et inférieur à A1, et le calcul de la puissance d'émission finale P conformément à la formule suivante :

$$P = P0 + (P1 - P0) / (A1 - A0) * (A - A0).$$

5. Procédé selon la revendication 1, 2, 3 ou 4, dans lequel
l'étape de sélection de l'E-TFC en fonction de la puissance d'émission finale déterminée comprend :

le calcul respectif de tailles de blocs de transport dans différents modes de modulation en fonction de ladite puissance d'émission finale, et la quantification respective des tailles de blocs de transport calculées conformément à une table d'ensembles de combinaisons de formats de transport par voies spécialisées améliorées (E-TFCS) ;
si les tailles de blocs de transport quantifiées dans les différents modes de modulation sont identiques, la sélection d'un mode de modulation à puissance d'émission minimale et puissance d'émission correspondante ;
si les tailles de blocs de transport quantifiées dans les différents modes de modulation ne sont pas identiques, la sélection d'un mode de modulation à taille maximale de blocs de modulation quantifiée et puissance d'émission correspondante.

6. Procédé selon la revendication 5, dans lequel
lesdits différents modes de modulation comprennent : QPSK et 16QAM.

7. Système pour sélectionner une combinaison de formats de transport par voies spécialisées améliorées pour un système d'accès par paquets à haut débit en liaison montante, HSUPA, comportant :

une unité de calcul de taux de codage, qui est conçue pour : déterminer une puissance d'émission maximale utilisable et, en fonction de la formule suivante, calculer le taux de codage correspondant à la puissance d'émission maximale utilisable :

$$A = A0 + (P - P0) / (P1 - P0) * (A1 - A0),$$

où P est une puissance d'émission, A est un taux de codage correspondant à P, P0 est une valeur maximale dans toutes les puissances de référence inférieures à P, P1 est une valeur minimale dans toutes les puissances de référence supérieures à P, A0 est un taux de codage de référence correspondant à P0, et A1 est un taux de codage de référence correspondant à P1 ;
la puissance maximale d'émission utilisable étant la plus petite parmi une puissance attribuée et une puissance maximale d'émission autorisée par un canal physique de liaison montante amélioré, E-PUCH, la puissance attribuée étant une somme d'une puissance attribuée d'un processus de demande de répétition automatique hybride, HARQ, et d'une valeur d'attribut de décalage de puissance dans HARQ d'un groupe en ordonnancement ou hors ordonnancement ;
une unité de détermination de puissance d'émission finale, laquelle est conçue pour : déterminer un taux de codage final et une puissance d'émission finale en fonction du taux de codage déterminé ; et
une unité de sélection de combinaison de formats de transport par voies spécialisées améliorées, E-TFC, laquelle est conçue pour : sélectionner une E-TFC en fonction de ladite puissance d'émission finale déterminée.

8. Système selon la revendication 7, dans lequel
ladite unité de détermination de puissance d'émission finale est conçue pour déterminer de la manière suivante le taux de codage final et la puissance d'émission finale :

en jugeant si, oui ou non, le taux de codage calculé est entre un taux de codage de référence maximal et un taux de codage de référence minimal et, si oui, en déterminant le taux de codage comme taux de codage final et en déterminant comme puissance d'émission finale la puissance d'émission maximale utilisable ;
si le taux de codage calculé est supérieur au taux de codage de référence maximal, en déterminant comme taux de codage final le taux de codage de référence maximal et, si le taux de codage calculé est inférieur au taux de codage de référence minimal, en déterminant comme taux de codage final le taux de codage de référence minimal ; en re-déterminant la puissance d'émission finale en fonction du taux de codage final déterminé.

9. Système selon la revendication 7 ou 8, dans lequel
ladite unité de sélection d'E-TFC est conçue pour sélectionner l'E-TFC de la manière suivante en fonction de la puissance d'émission finale déterminée :

en calculant respectivement des tailles de blocs de transport dans différents modes de modulation en fonction de ladite puissance d'émission finale, et en quantifiant respectivement les tailles de blocs de transport calculées conformément à une table d'ensembles de combinaisons de formats de transport par voies spécialisées améliorées, E-TFCS ;
si les tailles de blocs de transport quantifiées dans les différents modes de modulation sont identiques, en sélectionnant un mode de modulation à puissance d'émission minimale et également à puissance d'émission correspondante ; si les tailles de blocs de transport quantifiées dans les différents modes de modulation ne sont pas identiques, en sélectionnant un mode de modulation à taille maximale de blocs de modulation quantifiée et également à puissance d'émission correspondante.

```
┌─────────────────────────────────────────────────────────────┐
│         The first step: the maximum available transmit        │
│                  power is first determined                     │
└─────────────────────────────────────────────────────────────┘
                              │
                              ▼
┌─────────────────────────────────────────────────────────────┐
│  The second step: according to the reverse mapping relation   │
│  of the code rate and the transmit power, the code rate        │
│  corresponding to the maximum available transmit power is      │
│  calculated                                                    │
└─────────────────────────────────────────────────────────────┘
                              │
                              ▼
┌─────────────────────────────────────────────────────────────┐
│        The third step: the final code rate and the final      │
│              transmit power are determined                     │
└─────────────────────────────────────────────────────────────┘
                              │
                              ▼
┌─────────────────────────────────────────────────────────────┐
│  The fourth step: the E-TFCI and the modulation mode are      │
│  chosen according to the determined final code rate and the    │
│  final transmit power and according to the existing            │
│  quantization and table look-up process                        │
└─────────────────────────────────────────────────────────────┘
```

FIG. 1

```
                          ( Start )
                              │
                              ▼
              ┌───────────────────────────────┐
              │     A: Receive the grant        │
              └───────────────────────────────┘
                              │
                              ▼
         ┌──────────────────────────────────────────┐
         │   B: Calculate the equivalent granted power │
         └──────────────────────────────────────────┘
                              │
                              ▼
                    ◇ Greater than allowable
         Yes ─────── maximum transmit power? ─────── No
```

C: Use the allowable maximum transmit power to calculate the reference code rate, and respectively calculate code rates in the QPSK and 16QAM modes

D: Use the equivalent granted power to calculate the reference code rate, and respectively calculate code rates in the QPSK and 16QAM modes

◇ Is the calculated code rate greater than maximum reference code rate?

Yes — No

E: Set the final code rate as the maximum reference code rate to re-calculate the transmit power (respectively calculate in the QPSK and 16QAM)

G: Take the calculated code rate as the final code rate, and calculate the transport block size according to the final code rate (respectively calculate in the QPSK and 16QAM)

F: Calculate the transport block sizes according to the final code rate (respectively calculate in the QPSK and 16QAM)

H: Quantize the calculated transport block sizes according to the E-TFCS table (respectively calculate in the QPSK and 16QAM)

◇ Transport block sizes in the QPSK and 16QAM are same?

Yes — No

◇ The transmit power in the QPSK is lower
Yes — No

◇ The transport block in the QPSK is larger
Yes — No

I: Select the QPSK modulation mode and the corresponding transmit power

J: Select the 16QAM modulation mode and the corresponding transmit power

K: Select the QPSK modulation mode and the corresponding transmit power

L: Select the 16QAM modulation mode and the corresponding transmit power

FIG. 2

**EP 2 552 153 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5729557 A